# EUROPÄISCHE PATENTSCHRIFT

(11) **EP 3 527 775 B1**
(45) Veröffentlichungstag und Bekanntmachung des Hinweises auf die Patenterteilung: **20.11.2024**
(21) Anmeldenummer: 19152692.0
(22) Anmeldetag: 21.01.2019
(51) Int. Cl.: E06B 9/68, G05B 19/00, H04L 12/28

(54) **VERFAHREN ZUM BETRIEB EINES SONNENSCHUTZSYSTEMS**
METHOD OF OPERATING A SUN PROTECTION SYSTEM
PROCÉDÉ DE COMMANDE D'UN SYSTÈME DE PROTECTION SOLAIRE

(30) Priorität: 15.02.2018 DE 102018103455
(43) Veröffentlichungstag der Anmeldung: 21.08.2019
(73) Patentinhaber: elero GmbH, 73278 Schlierbach (DE)
(72) Erfinder: Haid, Eckart, 73252 Lenningen (DE)
(74) Vertreter: Ruckh, Rainer Gerhard

(56) Entgegenhaltungen:
- EP-A2- 0 718 730
- EP-A2- 1 091 079

## Beschreibung

Die Erfindung betrifft ein Verfahren zum Betrieb eines Sonnenschutzsystems.

Sonnenschutzsysteme, auf welche sich die vorliegende Erfindung bezieht, können insbesondere auch als Beschattungssysteme ausgebildet sein. Beispiele für derartige Sonnenschutzsysteme sind Markisensysteme, die an Außenwänden von Gebäuden installiert sind.

Derartige Sonnenschutzsysteme können generell mehrere Systemkomponenten aufweisen, welche durch elektrische Schaltmittel oder dergleichen betätigt werden können.

Bei bekannten Sonnenschutzsystemen können die einzelnen Systemkomponenten einzeln oder von einer zentralen Steuerung aus gesteuert werden, wodurch der Bedienkomfort durch eine zentrale Steuerung für einen Benutzer erhöht wird.

Nachteilig hierbei ist jedoch, dass eine solche zentrale Steuerung einen konstruktiven Mehraufwand bedeutet. Dieser Aufwand kann dadurch noch erhöht sein, dass die Schaltmittel für die einzelnen Systemkomponenten über Kabelverbindungen miteinander verbunden werden müssen.

Die EP 1 091 079 A2 betrifft ein Steuersystem zur Steuerung von motorischen Antriebseinheiten von Verdunklungssystemen oder Beschattungssystemen sowie die dazugehörigen Komponenten. Dabei werden die Antriebseinheiten jeweils durch eine Steuereinheit gesteuert, die mit einer Bedienschnittstelle zur Bedienung der jeweiligen Steuereinheit versehen sind. Das Steuersystem weist mindestens eine erste, eine erste Antriebseinheit steuernde Steuereinheit und eine zweite, eine zweite Antriebseinheit steuernde Steuereinheit auf. Die erste Steuereinheit weist außerdem mindestens ein erstes Kommunikationsmodul auf, über das die erste Steuereinheit Steuerbefehle an die zweite Steuereinheit versenden kann. Die zweite Steuereinheit weist mindestens ein zweites Kommunikationsmodul auf, mit dem die zweite Steuereinheit Steuerbefehle von der ersten Steuereinheit empfangen kann.

Der Erfindung liegt die Aufgabe zugrunde, einen bedienerfreundlichen und gleichzeitig sicheren Betrieb eines Sonnenschutzsystems zu ermöglichen.

Zur Lösung dieser Aufgabe sind die Merkmale des Anspruchs 1 vorgesehen. Vorteilhafte Ausführungsformen und zweckmäßige Weiterbildungen der Erfindung sind in den abhängigen Ansprüchen beschrieben.

Die Erfindung betrifft ein Verfahren zum Betrieb eines Sonnenschutzsystems mit einer Anzahl von Funkaktoren und einer Anzahl von Systemkomponenten, welche jeweils mittels eines der Funkaktoren steuerbar sind. In jedem Funkaktor ist ein Funksender, ein Funkempfänger und ein Mikroprozessor mit einer Speichereinheit integriert. Die Funkaktoren bilden ein dezentrales Netzwerk, wobei die Funkaktoren durch Senden und Empfangen von Funksignalen miteinander kommunizieren. Das Netzwerk weist eine Master-Slave-Konfiguration auf, wobei in der Master-Slave-Konfiguration einer der Funkaktoren einen Master bildet und die weiteren Funkaktoren Slaves bilden. Abhängig vom Zustand der dem Master zugeordneten Master-Systemkomponenten wird für jeden Slave nur eine vorgegebene Menge an Befehlen zur Steuerung der zugehörigen Slave-Systemkomponenten zugelassen.

Durch die berührungslos arbeitenden Funkaktoren ist eine bedienerfreundliche Betätigung der Systemkomponenten des erfindungsgemäßen Sonnenschutzsystems möglich. Die erfindungsgemäße Steuerung ist für Sonnenschutzsysteme aller Art möglich, wobei insbesondere mit dem Begriff Sonnenschutzsystem auch Beschattungssysteme aller Art umfasst sind.

Ein wesentlicher Vorteil der Erfindung besteht darin, dass die Funkaktoren zu einem dezentralen Netzwerk verbunden sind, indem sie über Funksignale untereinander Informationen austauschen können. Das so gebildete Netzwerk erfordert somit keinerlei Verkabelungsaufwand und kann dementsprechend auch schnell, einfach und damit auch kostengünstig installiert werden.

Ein weiterer wesentlicher Vorteil besteht darin, dass die Teilnehmer des Netzwerkes während des Betriebs des Sonnenschutzsystems eine Master-Slave-Konfiguration derart ausbilden, dass ein Funkaktor einen Master bildet und weitere Funkaktoren Slaves bilden.

Die Master-Slave-Konfiguration ist dabei so ausgebildet, dass immer nur ein Funkaktor den Master bildet, jedoch mehrere Funkaktoren Slaves sein können, wobei nicht zwingend alle weiteren Systemkomponenten, die nicht den Master bilden, Slaves sein müssen, das heißt es sind auch Funkaktoren zulässig, die weder Master noch Slave sind und somit nicht in die Master-Slave-Konfiguration eingebunden sind.

Generell wird mit der erfindungsgemäßen Master-Slave-Konfiguration eine dezentrale Zustandssteuerung realisiert, bei welcher keine zentrale Steuerung benötigt wird, wodurch ein erheblicher Einsparungs- und Rationalisierungseffekt gegenüber bekannten Steuerungssystemen erzielt wird.

Erfahrungsgemäß erfolgt die Zustandssteuerung derart, dass die Slaves abhängig vom aktuellen Master-Zustand, das heißt dem Zustand der Systemkomponenten, deren Funkaktor den Master bildet, nur eine vorgegebene Menge an zulässigen Befehlen zuführen können.

Damit wird ohne Einsatz einer zentralen Steuerung ein hierarchisches System erhalten, das eine bedienerfreundliche und gleichzeitig sichere Steuerung des Sonnenschutzsystems ermöglicht. Dabei besteht ein wesentlicher Vorteil darin, dass mit der erfindungsgemäßen Zustandserfassung unsichere oder sogar gefahrbringende Zustände vermieden werden.

Ist beispielsweise das Sonnenschutzsystem von einer Markise mit einem Volant gebildet, und ist der Markise weiter eine Beleuchtung und eine Heizung zugeordnet, bildet zweckmäßig der Funkaktor zur Betätigung des Markisenantriebs den Master, während die Funkaktoren zur Betätigung des Volantantriebs, der Beleuchtung und der Heizung Slaves bilden.

Um unsichere Zustände zu vermeiden, werden über die erfindungsgemäße Zustandsänderung die Slaves so angesteuert, dass vor einem Einfahren der Markise in ihre obere Endlage der Volant eingefahren und die Heizung und die Beleuchtung ausgeschaltet sind. Dadurch werden Beschädigungen des Volants und auch der Markise durch eine Überhitzung durch die Heizung oder der Beleuchtung vermieden.

Außer einer Gewährleistung einer Sicherheitsfunktion können auch nicht sicherheitsrelevante Funktionalitäten mit einer solchen Master-Slave-Konfiguration realisiert werden.

So kann in oben genanntem Beispiel eine durch einen Master-Zustand vorgegebene Stimmungserzeugung selbsttätig dadurch generiert werden, dass mit der Beleuchtung unterschiedliche Farben generiert werden können und abhängig hiervon Werte für die Heizung vorgegeben werden, wobei eine solche Steuerung durch Vorgaben des Master-Zustands nur dann möglich ist, wenn die Markise in ihre untere Endlage ausgefahren ist. Dann kann beispielsweise die Steuerung der Slaves so erfolgen, dass bei Emission von blauem Licht die Heizung ausgeschaltet ist, bei Emission von orangenem Licht die Heizung mit einer Teilleistung und bei Emission von rotem Licht die Heizung bei voller Leistung betrieben ist.

Gemäß einer vorteilhaften Ausführungsform ist eine Master-Slave-Konfiguration in einem Einlernbetrieb einlernbar.

Somit kann ein Benutzer oder auch der Hersteller bei Auslieferung des Sonnenschutzsystems im Einlernbetrieb die gewünschte Master-Slave-Konfiguration vorgeben, die solange erhalten bleibt, bis ein neuer Einlernbetrieb gestartet wird. Dadurch wird eine hohe Bedienerfreundlichkeit des Sonnenschutzsystems erhalten. Insbesondere ist vorteilhaft, dass auch bei einem Austausch von Systemkomponenten und zugeordneten Funkaktoren oder auch bei Erweiterungen des Sonnenschutzsystems durch einen neuen Einlembefehl die Master-Slave-Konfiguration aktualisiert werden kann.

Der Benutzer kann dabei relativ frei die Master-Slave-Konfiguration vorgeben. Zweckmäßig sind jedoch nur ausgewählte Funkaktoren und darin zugeordnete Systemkomponenten als Master wählbar, nämlich solche, die im Betrieb des Sonnenschutzsystems für dessen Funktion bestimmend sind. Zweckmäßig ist in jedem Funkaktor des Sonnenschutzsystems selbst hinterlegt, ob dieser einen Master bilden kann oder nicht.

Im vorgenannten Beispiel eines Sonnenschutzsystems mit einer Markise, einem Volant sowie einer Heizung und einer Beleuchtung wird vorteilhaft nur der Funkaktor der Markise als Master zugelassen.

Handelt es sich bei dem Sonnenschutzsystem um eine Gegenzuganlage, welche zwei Antriebe aufweist, und zwar jeweils einen zum Auf- und Abwickeln eines Behangs, wobei auch dieses Sonnenschutzsystem als weitere Komponenten eine Beleuchtung und Heizung aufweisen kann, so können in diesem Fall die Funkaktoren zum Betätigen beider Antriebe als Master in einer Master-Slave-Konfiguration gewählt werden. Durch die Festlegung des Funkaktors eines Antriebs als Master übernimmt der zweite Antrieb eine Slave-Funktion, so dass dieser abhängig vom Master synchronisiert wird.

Um einen funktionsfähigen Betrieb des Netzwerkes in einer Master-Slave-Konfiguration zu gewährleisten, ist es generell erforderlich, dass die Funkaktoren untereinander Funksignale austauschen.

Dabei wird der aktuelle Zustand der Master-Systemkomponenten über das Netzwerk an die Slaves kommuniziert. Auch die Slaves melden ihre Zustände an den Master zurück.

Somit sind alle Slaves einer Master-Slave-Konfiguration fortlaufend über den aktuellen Master-Zustand informiert und können somit ihrerseits Betätigungen an Systemkomponenten auslösen, die an diesen Master-Zustand angepasst sind. Damit wird die Intelligenz der einzelnen Funkaktoren genutzt um mit diesen das Sonnenschutzsystem dezentral steuern zu können.

Zweckmäßig sind für eine Master-Slave-Konfiguration in jedem Slave für alle Zustände der Master-Systemkomponenten die jeweils zugelassenen Befehle hinterlegt.

Gemäß einer vorteilhaften Ausgestaltung weist jeder Funkaktor einen Funkempfänger auf, welchem ein Kanal in einem Funksender, im Folgenden Sender genannt, zugeordnet ist. Durch eine Befehlseingabe am Sender ist der Funkempfänger angesteuert.

In diesem Fall wird eine Befehlseingabe an einem Sender für den Master an alle Slaves über das Netzwerk weitergesendet.

Damit ist gewährleistet, dass alle Benutzereingaben über Sender allen Teilnehmern des Netzwerkes zur Verfügung gestellt werden. Von diesen Informationen werden bei Betrieb des Sonnenschutzsystems nur die Eingaben des Senders an den Master, nicht jedoch an die Slaves benötigt. Durch Registrieren der Eingaben des Senders an den Master werden Zustandsänderungen des Masters den Slaves sofort bekannt gemacht, so dass sich dann die Slaves auf die jeweilige Änderung des Masterzustands sofort einstellen können.

Entsprechend dem aktuellen Master-Zustand ist somit in jedem Slave-Funkaktor selbst hinterlegt, welche Betätigungen dieser Funkaktor ausführen kann. Damit wird der Steuerungsaufwand des Sonnenschutzsystems äußerst gering gehalten. Im Gegensatz zu bekannten Master-Slave-Systemen muss der Master nicht die einzelnen Slaves zyklisch abfragen und ansprechen, um diesen Steuerbefehle vorzugeben. Vielmehr sind allein durch Einlernen des aktuellen Master-Zustands die erlaubten Betätigungen in jedem einen Slave bildenden Funkaktor vorbekannt und können dort ohne weitere Intervention des Masters selbsttätig durchgeführt werden.

Bei Betrieb des Sonnenschutzsystems in einer Master-Slave-Konfiguration kann vorteilhaft abhängig von einem Befehl für den Master der Funkaktor wenigstens eines Slaves selbsttätig betätigt sein.

Dies ist insbesondere dann vorteilhaft, wenn für einen Master-Zustand eine Sicherheitsfunktion realisiert werden soll. Diese wird durch die selbsttätige Betätigung des oder mehrerer Slaves bildenden Funkaktoren sichergestellt, ohne dass hierfür ein Benutzereingriff erforderlich ist, so dass dadurch bedingte Fehlerquellen ausgeschlossen sind.

Weiterhin sind abhängig von einem Befehl für den Master unzulässige Befehle für wenigstens einen Slave gesperrt.

Auch durch diese Maßnahme werden Fehler durch falsche Benutzereingaben ausgeschlossen und damit die Funktionssicherheit des Sonnenschutzsystems erhöht, denn der Benutzer kann für einen Slave nur zulässige Befehle eingeben und auslösen, die nicht zu einem unsicheren Zustand des Sonnenschutzsystems führen.

Die Erfindung wird im Folgenden anhand der Zeichnung erläutert. Es zeigt:

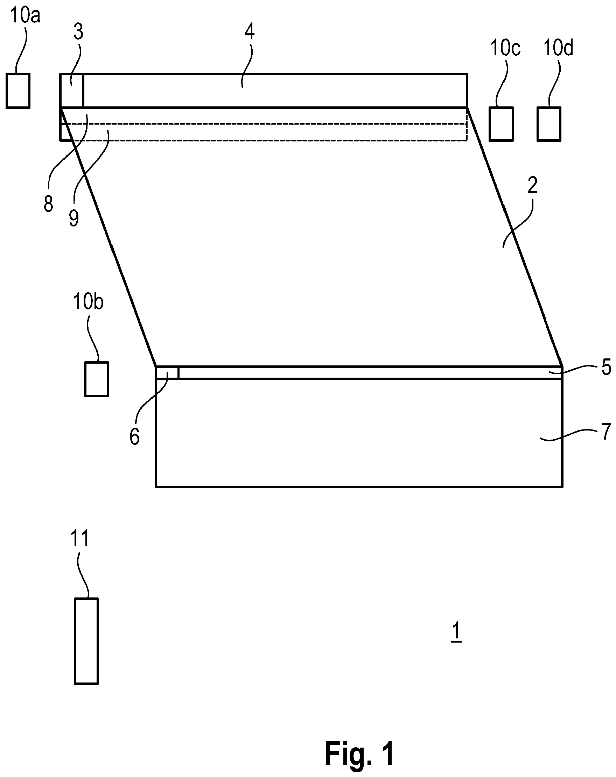

- Figur 1: schematische Darstellung eines Ausführungsbeispiels des orfin Sonnenschutzsystems mit dem erfindungsgemäßen Verfahren zu dessen Betrieb.

Figur 1 zeigt ein Ausführungsbeispiel des Sonnenschutzsystems 1. Das Sonnenschutzsystem 1 ist im vorliegenden Fall als Markisensystem ausgebildet, das an einer nicht gesondert dargestellten Außenwand eines Gebäudes installiert ist.

Das Markisensystem umfasst eine Markise 2, die mittels eines Markisenantriebs 3 auf einer Welle 4 auf- und abwickelbar ist. Am vorderen Rand der Markise 2 ist ein auf einer weiteren Welle 5 mittels eines Volantantriebs 6 auf- und abwickelbarer Volant 7 vorgesehen.

Als weitere Systemkomponenten des Markisensystems sind eine Beleuchtung 8 und eine Heizung 9 vorgesehen. Mit der Beleuchtung 8 kann die Markise 2 in unterschiedlichen Farben beleuchtet werden. Mit der Heizung 9 kann der Bereich unter der Markise 2 beheizt werden.

Die Betätigung der Systemkomponenten des Markisensystems erfolgt über Funkaktoren 10a - 10d. In jedem Funkaktor 10a - 10d sind ein Funksender, Funkempfänger und ein Mikroprozessor mit einer Speichereinheit integriert, wobei diese Komponenten der Funkaktoren 10a - 10d nicht gesondert dargestellt sind. Die Funkaktoren 10a - 10d können auch direkt in den Antrieben integriert sein.

Ein Benutzer kann die Funkaktoren 10a - 10d mit einem Sender 11 ansteuern, in welchem ebenfalls ein Funksender und optional ein Funkempfänger integriert sind. Durch Aussuchen spezifisch kodierter Funksignale können mit dem Sender 11 die Funkaktoren 10a - 10d selektiv oder in Gruppen angesprochen werden.

Erfindungsgemäß bilden die Funkaktoren 10a - 10d ein dezentrales Netzwerk, wobei die Funkaktoren 10a - 10d durch Senden und Empfangen von Funksignalen miteinander kommunizieren.

In einem Einlernbetrieb wird von einem Benutzer eine Master-Slave-Konfiguration eingelernt, indem einer der Funkaktoren 10a - 10d als Master definiert wird und weitere als Slaves. Im vorliegenden Fall bildet der Funkaktor 10a zur Betätigung des Markisenantriebs 3 den Master, während die weiteren Funkaktoren 10b - 10d Slaves bilden. Diese Master-Slave-Konfiguration bleibt während des folgenden Arbeitsbetriebs solange erhalten, bis ein neuer Einlernbetrieb gestartet wird oder das System umkonfiguriert wird
Generell können dabei Master-Slave-Konfigurationen derart vorgegeben werden, dass nur ein Funkaktor 10a - 10d den Master bildet. Weiterhin müssen nicht alle weiteren Funkaktoren 10a - 10d Slaves bilden.

Das Netzwerk, für welches eine Master-Slave-Konfiguration vorgegeben wurde, wird dezentral über die Master-Funktion gesteuert, das heißt es ist keine zentrale Steuerung mit einer separaten Steuereinheit erforderlich.

Die Steuerung des Netzwerkes ist in Form einer Zustandssteuerung ausgebildet. Diese Zustandssteuerung funktioniert derart, dass abhängig vom Zustand der dem Master zugeordneten Systemkomponenten, im Folgenden Master-Zustand genannt, nur eine vorgegebene Menge an Befehlen zur Steuerung der Slave-Systemkomponenten zugelassen ist, das heißt je nach Master-Zustand sind unzulässige Befehle für einzelne Slaves gesperrt.

Diese Zustandssteuerung wird dadurch erhalten, dass für eine eingelernte Master-Slave-Konfiguration für die einzelnen Master-Zustände für alle Slaves die jeweils zugelassenen Befehle in diesen selbst hinterlegt sind.

Während des Betriebs des Netzwerkes werden Befehle für einen Funkaktor 10a - 10d, die über den Sender 11 eingegeben werden, von allen anderen Funkaktoren 10a - 10d mitgehört. Handelt es sich um einen Befehl für einen Slave, kann diese Information von den anderen Funkaktoren 10a - 10d verworfen werden. Handelt es sich jedoch um einen Befehl für den Master, hören dies alle Slaves bildenden Funkaktoren 10a - 10d mit, so dass in diesen der aktuelle Master-Zustand bekannt ist. Abhängig vom Master-Zustand können dann für die Slaves bildenden Funkaktoren 10a - 10d nur noch die für diesen Master-Zustand zulässigen Befehle ausgeführt werden. Dabei können abhängig vom Master-Zustand zulässige Befehle vom Slave selbsttätig ausgeführt werden. Alternativ wird bei Eingabe eines Befehls über den Sender 11 vom jeweiligen Slave geprüft, ob der Befehl zulässig ist und nur in diesem Fall vom Slave ausgeführt.

Im vorliegenden Ausführungsbeispiel gibt es für den den Master bildenden Funkaktor 10a zwei Master-Zustände, nämlich den einer eingefahrenen Markise 2 und den einer ausgefahrenen Markise 2. Wird über den Sender 11 der Befehl "Markise einfahren" vorgegeben, wird der Master-Zustand "eingefahrene Markise" an die Slaves übermittelt. Um Gefahrenzustände zu vermeiden, ist im Funkaktor 10b hinterlegt, in diesem Fall selbsttätig den Volant 7 einzufahren, so dass Beschädigungen des Volants 7 oder der Markise 2 bei Einfahren der Markise 2 vermieden werden. Weiterhin werden bei diesem Master-Zustand die Funkaktoren 10c, 10d selbsttätig angesteuert, um die Heizung 9 und Beleuchtung 8 auszuschalten, wodurch eine Überhitzung der Markise 2 im eingefahrenen Zustand verhindert wird.

Gibt dann der Benutzer über den Sender 11 einen unzulässigen Befehl für einen Slave ein, so wird dieser nicht ausgeführt. Beispielsweise wird eine Benutzereingabe "Volant ausfahren" als unzulässiger Befehl nicht ausgeführt.

Auch für den Master-Zustand "ausgefahrene Markise" können zulässige Befehle für die Slaves vorgegeben werden.

Beispielsweise kann bei ausgefahrener Markise 2 eine Stimmungserzeugung durch eine spezifische Kopplung der Heizung 9 an Beleuchtungszustände der Beleuchtung 8 vorgegeben werden. Beispielsweise kann für die entsprechenden Slaves folgende Zuordnung hinterlegt werden: Strahlt die Beleuchtung 8 blaues Licht ab, ist die Heizung 9 ausgeschaltet. Strahlt die Beleuchtung 8 oranges Licht ab, ist die Heizung 9 in Teillast (zum Beispiel bei 70 %) aktiviert. Strahlt die Beleuchtung 8 rotes Licht ab, arbeitet die Heizung 9 in Volllast, das heißt 100 %.

In diesem Fall kann der Benutzer über den Sender 11 als zulässige Befehle eingeben, ob die Beleuchtung 8 blaues, oranges oder rotes Licht abstrahlen soll. Je nach Befehlseingabe stellt sich dann der Betrieb der Heizung 9 gemäß der vorgenannten Zuordnung selbsttätig ein. In dieser Master-Slave-Konfiguration sind für den den Volant 7 steuernden Funkaktor 10a - 10d keine Restriktionen vorgegeben, so dass durch Befehlseingaben am Sender 11 der Volant 7 beliebig verstellt werden kann.

### Bezugszeichenliste

- (1): Sonnenschutzsystem
- (2): Markise
- (3): Markisenantrieb
- (4): Welle
- (5): weitere Welle
- (6): Volantantrieb
- (7): Volant
- (8): Beleuchtung
- (9): Heizung
- (10a - 10d): Funkaktoren
- (11): Sender

## Patentansprüche

1. Verfahren zum Betrieb eines Sonnenschutzsystems (1) mit einer Anzahl von Funkaktoren (10a - 10d) und einer Anzahl von Systemkomponenten, welche jeweils mittels eines der Funkaktoren (10a - 10d) steuerbar sind, wobei in jedem Funkaktor (10a - 10d) ein Funksender, ein Funkempfänger und ein Mikroprozessor mit einer Speichereinheit integriert ist, wobei die Funkaktoren (10a - 10d) ein dezentrales Netzwerk bilden, wobei die Funkaktoren (10a - 10d) durch Senden und Empfangen von Funksignalen miteinander kommunizieren, wobei das Netzwerk eine Master-Slave-Konfiguration aufweist, wobei in der Master-Slave-Konfiguration einer der Funkaktoren (10a - 10d) einen Master bildet und die weiteren Funkaktoren (10a - 10d) Slaves bilden, wobei abhängig vom Zustand der dem Master zugeordneten Master-Systemkomponenten für jeden Slave nur eine vorgegebene Menge an Befehlen zur Steuerung der zugehörigen Slave-Systemkomponenten zugelassen wird.

2. Verfahren nach Anspruch 1, **dadurch gekennzeichnet, dass** die Master-Slave-Konfiguration in einem Einlernbetrieb eingelernt wird.

3. Verfahren nach einem der Ansprüche 1 oder 2, **dadurch gekennzeichnet, dass** für die Master-Slave-Konfiguration in jedem Slave für alle Zustände der Master-Systemkomponenten die jeweils zugelassenen Befehle hinterlegt sind.

4. Verfahren nach einem der Ansprüche 1 bis 3, **dadurch gekennzeichnet, dass** der aktuelle Zustand der Master-Systemkomponenten über das Netzwerk an die Slaves kommuniziert wird.

5. Verfahren nach einem der Ansprüche 1 bis 4, **dadurch gekennzeichnet, dass** die Funkaktoren (10a - 10d) mittels eines Senders (11) angesteuert werden, wobei in dem Sender (11) ein Funksender integriert ist.

6. Verfahren nach Anspruch 5, **dadurch gekennzeichnet, dass** dem Funkempfänger eines Funkaktors (10a - 10d) der in dem Sender (11) integrierte Funksender zugeordnet ist, wobei durch eine Befehlseingabe am Sender (11) der Funkempfänger angesteuert wird.

7. Verfahren nach Anspruch 6, **dadurch gekennzeichnet, dass** eine Befehlseingabe an dem Sender (11) für den Master an alle Slaves über das Netzwerk weitergesendet wird.

8. Verfahren nach einem der Ansprüche 1 bis 7, **dadurch gekennzeichnet, dass** abhängig von einem Befehl für den Master der Funkaktor (10a - 10d) wenigstens eines Slaves selbsttätig betätigt wird.

9. Verfahren nach einem der Ansprüche 1 bis 8, **dadurch gekennzeichnet, dass** abhängig von einem Befehl für den Master unzulässige Befehle für wenigstens einen Slave gesperrt werden.

## Claims

1. A method for operating a sun protection system (1) with a number of radio actuators (10a - 10d) and a number of system components, each of which can be controlled by means of one of the radio actuators (10a - 10d), wherein a radio transmitter, a radio receiver and a microprocessor with a memory unit are integrated in each radio actuator (10a - 10d), wherein the radio actuators (10a - 10d) form a decentralised network, wherein the radio actuators (10a - 10d) are controlled by means of a radio receiver and a microprocessor with a memory unit, a radio receiver and a microprocessor with a memory unit is integrated in each radio actuator (10a - 10d), wherein the radio actuators (10a - 10d) form a decentralised network, wherein the radio actuators (10a - 10d) communicate with one another by transmitting and receiving radio signals, wherein the network has a master-slave configuration, wherein in the master-slave configuration one of the radio actuators (10a - 10d) forms a master and the other radio actuators (10a - 10d) form slaves, wherein only a predetermined quantity of commands for controlling the associated slave system components is permitted for each slave depending on the state of the master system components assigned to the master.

2. A method according to claim 1, **characterised in that** the master-slave configuration is taught in a teach-in mode.

3. A method according to one of claims 1 or 2, **characterised in that** for the master-slave configuration, the respectively permitted commands are stored in each slave for all states of the master system components.

4. A method according to one of claims 1 to 3, **characterised in that** the current status of the master system components is communicated to the slaves via the network.

5. A method according to one of claims 1 to 4, **characterised in that** the radio actuators (10a - 10d) are controlled by means of a transmitter (11), wherein a radio transmitter is integrated in the transmitter (11).

6. A method according to claim 5, **characterised in that** the radio receiver of a radio actuator (10a - 10d) is assigned the radio transmitter integrated in the transmitter (11), the radio receiver being controlled by a command input at the transmitter (11).

7. A method according to claim 6, **characterised in that** a command input at the transmitter (11) for the master is forwarded to all slaves via the network.

8. A method according to one of claims 1 to 7, **characterised in that** the radio actuator (10a - 10d) of at least one slave is actuated automatically as a function of a command for the master.

9. A method according to one of claims 1 to 8, **characterised in that**, depending on a command for the master, impermissible commands are blocked for at least one slave.

## Revendications

1. Procédé d'exploitation d'un système de protection solaire (1) comportant un certain nombre d'actionneurs radio (10a - 10d) et un certain nombre de composants du système, chacun pouvant être commandé au moyen d'un des actionneurs radio (10a - 10d), dans lequel un émetteur radio, un récepteur radio et un microprocesseur avec une unité de mémoire sont intégrés dans chaque actionneur radio (10a - 10d), dans lequel les actionneurs radio (10a - 10d) forment un réseau décentralisé, dans lequel les actionneurs radio (10a - 10d) sont commandés au moyen d'un récepteur radio et d'un microprocesseur avec une unité de mémoire, un récepteur radio et un microprocesseur avec une unité de mémoire sont intégrés dans chaque actionneur radio (10a - lOd), dans lequel les actionneurs radio (10a - 10d) forment un réseau décentralisé, dans lequel les actionneurs radio (10a - 10d) communiquent entre eux en émettant et en recevant des signaux radio, dans lequel le réseau a une configuration maître-esclave, dans laquelle, dans la configuration maître-esclave, l'un des actionneurs radio (10a - 10d) forme un maître et les autres actionneurs radio (10a - 10d) forment des esclaves, dans laquelle seule une quantité prédéterminée de commandes pour contrôler les composants du système esclave associés est autorisée pour chaque esclave en fonction de l'état des composants du système maître assignés au maître.

2. Procédé selon la revendication 1, **caractérisé par le fait que** la configuration maître-esclave est enseignée dans un mode d'apprentissage.

3. Procédé selon l'une des revendications 1 ou 2, **caractérisé par le fait que** pour la configuration maître-esclave, les commandes respectivement autorisées sont stockées dans chaque esclave pour tous les états des composants du système maître.

4. Procédé selon l'une des revendications 1 à 3, **caractérisé par le fait que** l'état actuel des composants du système maître est communiqué aux esclaves par l'intermédiaire du réseau.

5. Procédé selon l'une des revendications 1 à 4, **caractérisé par le fait que** les actionneurs radio (10a - 10d) sont commandés au moyen d'un émetteur (11), dans lequel un émetteur radio est intégré à l'émetteur (11).

6. Procédé selon la revendication 5, **caractérisé par le fait que** le récepteur radio d'un actionneur radio (10a - 10d) est associé à l'émetteur radio intégré dans l'émetteur (11), le récepteur radio étant commandé par une entrée de commande au niveau de l'émetteur (11).

7. Procédé selon la revendication 6, **caractérisé par le fait qu'**une entrée de commande au niveau de l'émetteur (11) pour le maître est transmise à tous les esclaves via le réseau.

8. Procédé selon l'une des revendications 1 à 7, **caractérisé par le fait que** l'actionneur radio (10a - 10d) d'au moins un esclave est actionné automatiquement en fonction d'une commande du maître.

9. Procédé selon l'une des revendications 1 à 8, **caractérisé par le fait que**, en fonction d'une commande destinée au maître, des commandes non autorisées sont bloquées pour au moins un esclave.
